# EUROPEAN PATENT APPLICATION

(11) **EP 4 610 152 A1**
(43) Date of publication of application: **03.09.2025**
(21) Application number: 24160825.6
(22) Date of filing: 01.03.2024
(51) Int. Cl.: B62D 57/032

(54) **WALKING ROBOT SYSTEM, RECONFIGURABLE FOOT AND LEG SYSTEM MOUNTABLE IN THE WALKING ROBOT SYSTEM, AND END EFFECTOR THEREFOR**

(71) Applicant: Scuola universitaria professionale della Svizzera italiana (SUPSI), 6928 Manno (CH)
(72) Inventor: Gitardi, Diego, Stabio (CH); Valente, Anna, Pura (CH)
(74) Representative: Modiano, Gabriella Diana

(57) **Abstract**

A walking robot system for performing a task at a surface requiring maintenance, comprising a robotic platform (2) which extends along longitudinal (A-A) and transverse (B-B) axes thereof, and two or more walking legs (3) articulated to the robotic platform (2) and configured to enable at least flexion and extension leg-walking movements of the robot system (1) on a surface (S).

Each leg (3) comprises a femoral section (FS) articulated to the platform (2) at a hip articulation (HA) configured to allow the rotation of said femoral section (FS) with respect to the robotic platform (2), and a tibial section (TS) articulated to the femoral section (FS) by way of a knee section (KS) configured to allow the rotation of the femoral section (FS) with respect to the tibial section (TS).

A foot structure (4) is articulated at the free end of the tibial section (TS). The foot structure is movable between a folded position, in which the foot structure (4) is folded onto the leg (3), and an extended, unfolded, surface-touching and gripping position, and comprises a gripping system (5) suitable to enable at least the temporary, secure gripping of the foot structure (4) on the surface requiring maintenance (S).

The gripping system (5) comprises at least one, and preferably three, fingers (6), each comprising at least one gripping element (7). An actuation and transmission system (ATS) is provided and integrated in the robot system (1) and driving actuation means (10a-10c) are provided at, and operatively connected to, the foot structure (4).

The actuation means (10a-10c) are adapted respectively to fold the foot structure (4) to a first configuration, and to unfold the foot structure (4) to a second configuration, onto the leg (3), with respect to the leg (3), and to move the legs (3) for the performance of walking motions with the foot structure (4) both in the first, folded and in the second, unfolded configurations.

The fingers (6) are configured to allow walking motions of the leg (3) for the movement of the robotic platform (2) on the surface (S), both in the first configuration with erect gait, with the foot structure (4) folded, and in the second configuration with sprawling gait, with the foot structure (4) unfolded to the extended, surface-touching and gripping position.

A related reconfigurable leg and foot system (20) and a related end effector (13) can be provided in the walking robot system (1).

## Description

The present invention relates to a walking robot system, such as a legged robot, to a reconfigurable foot and leg system for mounting in the walking robot system, and to an end effector therefor.

Mobile robots are known that are used nowadays and which include legged robots also known as walking leg robots. They comprise a robotic platform which accommodates the actuation system, the work system, and the control systems, which contain some level of computer programming code with capabilities for remote control and artificial intelligence interaction with the environment. The robotic platform is supported by legs, designed for locomotion on even or uneven terrain, which are actuated by leg actuators of the actuation system.

The legs also require control of their leg actuators to maintain balance, control that is provided by the control systems. The work system is generally the structure that is provided for performing any working activity the robot is designed for.

The known legged robots that comprise a robotic platform movable on legs are categorized by the number of limbs, such as one-, two-, three- four-, six-, eight-legged etc., that they use. Many-legged robots tend to be more stable, while having fewer legs lends itself to greater maneuverability.

Legged robots generally imitate humans and legged mammals and animals, such as dogs or spiders, in an example of biomimicry.

The periodic contact of the walking legs of the robot with the ground during walking will be referred to hereinafter as walking gait.

Gait is a series of rhythmic and coordinated movements of the upper limb and the lower limb to bring about forward propulsive movements of the supported body with minimum energy expenditure, and varies according to different patterns of movement of different living beings.

The walking leg of a robot is known therefore to be generally structured for walking on the surfaces for which it is designed.

When the walking surfaces are substantially horizontal, a robot is used that has, for example, a "dog" configuration. In the dog configuration the limbs, in particular the legs, are generally arranged on planes lying along the sides of the robotic platform. The planes are substantially parallel to a longitudinal axis of the robot body or robotic platform, as are generally the legs of a dog are with respect to its body.

However, when the walking surfaces are vertical, steeply inclined, or overhanging, a robot is used that has a "spider" configuration.

In this configuration the limbs, in particular the legs, are arranged spread out in directions angled with respect to both the longitudinal and transverse axes of the robot body, and are enabled to perform rotational movements by a hip joint (HJ).

This allows the legs to cover or reach a wider, larger area than that covered by the legs in the dog configuration. In other words, this outward inclination of the legs is such that the surface over which they spread is in any case significantly bigger than the area covered by the robotic platform body, i.e. in the same manner as for a spider.

In other words, spiders walk with their knees pointing away from their bodies and their feet off to the sides. This form of walking is known as the sprawling gait.

Mammals, as with dogs, have their knees and feet pointing underneath their bodies, which is called an erect gait.

Although robots are known that are made to allow gait variation, such variation relates to posture control based on the characteristics of the terrain. For example, when the terrain is flat the walking gait can change to a trot, which is a gait in which the diagonal pairs of legs move in phase, but the two pairs together move out of phase.

This only requires tuning for each leg according to the body oscillation.

However, no robots are known that can change gait completely, for example from a walking, erect gait or trot to a sprawling gait.

Generally, the speed and the energy efficiency of a sprawling-type walking robot are lower than those of an erect-type walking robot.

Also in robotics, end effectors are known, which consist of a device mounted at the end of a robotic arm and designed to interact with the environment. The exact nature of this device depends on the application of the robot.

Thus, the end effector is a peripheral device that attaches to a robot's arm wrist and to which various tools can be operatively connected, allowing the robot to carry out various tasks.

Most end effectors are of the mechanical, electromechanical, electronic, or hybrid type and serve as grippers, process tools, and manufacturing or sensor devices.

In the strict definition, which originates from serial robotic manipulators, the end effector is therefore always a specific extension of the robot body. The various specialist work tools are attached to this specific extension.

In a wider sense, an end effector is the part of a robot that interacts with the work environment. This generally does not regard the wheels of a mobile robot or the feet of a walking robot, which are not end effectors but only part of a robot's mobility apparatus.

Legged robots are known that are provided with one or more arms with wrists to which an end effector is connected as a peripheral device to which various tools are in turn operatively connected.

In view of the above, the known robots are made to use walking legs for walking and arms to support and operate end effectors outfitted for various tasks.

In the last 10 years or so, the robotics industry has recognized autonomous robots and mobile robotic systems as potential market segments that could expand robotics technologies into new sectors, such as maintenance operations in the most varied fields.

These fields should advantageously include, for example, offshore and inshore applications, where strong, gusty winds often occur, making it difficult for robots to move on horizontal or on sloping, even vertical or overhanging surfaces that are uneven and corroded.

When offshore structures, such as offshore terminals, oil rigs and facilities for extracting and processing oil and natural gas, or nuclear facilities and other structures, for example steel or chemical industries, operating under extreme environmental conditions that are challenging and dangerous for human beings require inspection or maintenance, walking robot systems are required that can be efficiently used for the required purposes.

In such context, specific robotic platforms should be designed and developed in order to meet the various different industrial and environmental needs.

One of the current critical challenges is still the development of robots and robotic platforms that are able to walk under harsh environmental conditions on inclined or overhanging surfaces or to climb vertical surfaces that are characterized by irregular, curved or flat shapes, such as walls or overhanging surfaces, regardless of the materials they are made from, which comprise, but are not limited to, ferrous and non-ferrous materials.

Difficulties also arise from the fact that robots are required that should furthermore provide specialized arms that can bear the end effectors suitable for carrying out the required tasks.

Solving these technical problems represents a key factor in the diffusion of efficient use of robotic platforms in new, high-impact industrial sectors.

While walking on substantially horizontal surfaces, even if rough, is possible for a robot having a "dog" configuration standing on a foot-type structure, movement on inclined, vertical or overhanging surfaces is better, or indeed only possible, for a robot having a "spider" configuration.

The latter configuration requires walking by way of a foot structure that is adapted to grip on the walking surfaces. However, this foot structure makes a "spider" robot at least energetically inefficient for walking long distances.

The foot structures for the spider configuration are generally constituted by vacuum grippers, generally provided by vacuum cups or other gripping systems.

The vacuum cups or gripping systems should be effective not only to provide sufficient gripping force to safely keep the robot or robotic platform on the surface on which it is moving, but also to efficiently secure the safe movement of an articulated arm with its end effector for performing various required tasks that involve the walking surface itself or other structures related to such surface.

Therefore, there is a need in the field to provide a new, different kind of robotic foot/tool/end effector arrangement for robots, which can be suitable for carrying out movements and operations in narrow spaces and with low energy consumption by virtue of their dexterity and adaptability to every type of surface.

A much-needed solution would offer robots that are able to climb inclined or vertical surfaces or walk on overhanging surfaces, while advantageously being capable of maintaining efficient walking dynamics and equilibrium on horizontal surfaces, all at low energy consumption rates.

Present technology in the various industrial sectors is known to provide either legged robots with standard feet that are reasonably efficient for walking on horizontal surfaces or with legs with vacuum pads that are better suited for gripping on non-horizontal, vertical or overhanging surfaces.

The known robotic solutions do not offer efficient legged robots displaying workable combinations suitable for, and energy efficient in, all such situations.

The existing vacuum climbing solutions cannot guarantee high dynamics while walking on floors, as the cups take time to grip to and release from the walking surface and will also be subject to premature wear and would need continuous maintenance.

Moreover, the known vacuum cups designed for walking leg robots do not guarantee high grip over curved and rough surfaces, as they are generally conceived for flat and smooth ones.

When used on surfaces under severe weather conditions and in harsh environments, such as in offshore situations, the robot system will also have to deal with rust and surface defects, which could result in vacuum cup detachment.

The aim of the present invention is therefore to provide a walking robot system that overcomes the current limitations of the existing walking robot systems and is highly effective as regards its operation and energy consumption, even when operated for walking under harsh environmental conditions and on horizontal, inclined, vertical or overhanging surfaces and also when such surfaces are rough, uneven, or corroded.

Within this aim, an object of the present invention is to provide a robot system that is also highly effective when required to perform inspection and maintenance operations of installations and industrial structures in an independent manner, without direct human intervention, and on any horizontal, inclined, vertical or overhanging rough surfaces, even under harsh environmental conditions.

Another object of the invention is to provide a reconfigurable leg and foot system that can be easily and efficiently fitted to a walking robot system with robotic platform in order to make it suitable to achieve low energy consumption both when walking over flat surfaces and on inclined, vertical or overhanging surfaces, even when such surfaces are rough, uneven, corroded, and also when the robot system is used to operate an end effector.

A further object of the present invention is to provide a highly effective walking robot system with a compact and strong structure, that is energy efficient and can be readily made using materials and components available on the market so as to limit the costs for its fabrication.

The above aim and objects are achieved by a walking robot system for performing a task on a surface requiring maintenance that has the features set forth in claim 1, by a reconfigurable leg and foot system mountable in a walking robot system having the features set forth in claim 11, and by an end effector mountable in said walking robot system having the features set forth in claim 15.

In a preferred embodiment, a walking robot system for performing a task at a surface requiring maintenance comprises a robotic platform extending along longitudinal and transverse axes thereof, and two or more walking legs articulated to the robotic platform and configured to enable at least flexion and extension leg-walking movements of the robot system on a surface.

Each leg comprises a femoral section articulated to the platform at a hip articulation which is configured to allow rotation of the femoral section with respect to the robotic platform, a tibial section articulated to said femoral section by way of a knee section which is configured to allow rotation of the femoral section with respect to the tibial section, and a foot structure articulated at a free end of the tibial section, the foot structure being movable between a folded position in which the foot structure is folded onto the leg and an extended, unfolded, surface-touching and gripping position.

The foot structure comprises a gripping system suitable to enable at least the temporary, secure gripping of the foot structure on the surface requiring maintenance. The gripping system comprises at least one, and preferably three, fingers, with each finger comprising at least one gripping element.

The walking robot system further comprises an actuation and transmission system integrated therein and driving actuation means provided at, and operatively connected to, the foot structure for the actuation thereof.

The actuation means are adapted to fold the foot structure to a first configuration and, respectively, unfold the foot structure to a second configuration with respect to the leg. They are also adapted to move the legs in order to perform walking motions with the foot structure both in the first, folded and second, unfolded configurations.

The fingers are configured to allow walking motions of the leg for movement of the robotic platform on the surface, both in the first configuration with erect gait, with the foot structure folded, and in the second configuration with sprawling gait, with the foot structure unfolded to the extended, surface-touching and gripping position.

The walking robot system can further comprise at least one end effector mounted at the tibial section of at least one of the two or more walking legs.

The at least one end effector can preferably be mounted at a lower end of the tibial section.

The at least one end effector is configured to support a tool, a sensor or any other device devised for performing a required task in relation to the surface or an element associated with the surface and requiring maintenance.

The tibial section of each leg comprises an upper shin connected at an upper end thereof to the knee section, a lower end of the upper shin being connected to a lower shin. The lower shin bears the foot structure at its lower, free end.

The at least one end effector is provided mounted at the foot structure in a position suitable to allow the performance of a required task in relation to the surface or element associated with the surface in either of the extended and folded positions of the foot structure.

In an aspect of the invention, one or more end effectors can be provided mounted at the lower end of the lower shin on a longitudinal axis thereof and/or at a free end of the at least one finger and/or between adjacent fingers, all in a position suitable to allow the performance of said task in either of the extended and folded positions of the foot structure.

The at least one gripping element can comprise one or more from the group comprising a suction cup element, a permanent magnet, a solenoid, a clamp, a pincers, hooks, claws and/or any other element adapted to provide, in the gripping position, at least temporary secure gripping of the foot structure on the surface requiring maintenance.

The femoral and tibial sections are movable with respect to each other in a same plane.

According to a further aspect, the hip articulation can comprise first and second rotary joints configured to enable the rotation of the femoral section about first and second hip joint axes which lie respectively on a first and on a second plane, said first and second planes mutually intersecting.

In a variant, the first and second axes can be arranged perpendicular to each other.

The knee section can comprise a third rotary joint configured to enable the rotation of the tibial section with respect to the femoral section, about a knee axis which is substantially perpendicular to the plane of movement of the femoral and tibial sections.

The tibial section can comprise a fourth rotary joint configured to enable the axial rotation of a shaft of the actuation means about an axial axis of the tibial section.

The foot structure can comprise a fifth rotary joint configured to enable the actuation, upon the axial rotation actuated by the fourth rotary joint, for the movement of the foot structure between the folded position and the extended, unfolded position.

All of the above mentioned first to fifth joints are actuatable by way of the actuation means driven by the actuation and transmission system.

According to another aspect of the invention, the actuation means can further be adapted to move the legs from a first walking arrangement, in which the legs are arranged opposite to each other at opposite sides of the robotic platform for walking movement in planes parallel to each other and to the longitudinal axis of the robotic platform by way of hip joint rotation about the joint axis, to a second walking arrangement, in which the legs are arranged spread out in directions angled with respect to both the longitudinal and the transverse axes of the robotic platform for walking movement by way of hip joint rotation about the first and second axes of the hip joint, and, respectively, from the second walking arrangement back to the first walking arrangement.

In a useful aspect the actuation means for actuation of the foot structure comprises a micromotor.

In an embodiment, the micromotor can comprise an actuation motor, a planetary gearbox, and a feedback system connected to the actuation and transmission system.

The actuation motor actuates the rotation of the shaft, on which a worm screw is mounted. The worm screw transmits motion to a worm gearwheel positioned radially with respect to the worm screw and mounted along with the at least one finger on a fork element mounted at the free end of the tibial section.

In a useful aspect of the invention the lower shin houses a conveyance system for conveying air and/or liquid and/or electric current for the actuation of the gripping elements.

In an advantageous variant of the invention, the walking robot system for performing a task at a surface requiring maintenance comprises a robotic platform extending along longitudinal and transverse axes thereof and two or more walking legs articulated to the robotic platform for allowing at least flexion and extension leg-walking movements of the robot system on a surface.

Each leg comprises a femoral section articulated to the platform at a hip articulation configured to allow rotation of the femoral section with respect to the robotic platform about first and second axes that lie respectively on a first and on a second plane, said first and second planes mutually intersecting.

In a variant, the first and second axes can be arranged perpendicular to each other.

The leg also comprises a tibial section having an upper shin thereof articulated to the femoral section by way of a knee section configured to allow the rotation of the femoral section with respect to the tibial section about a knee axis, and a foot structure articulated to a free end of a lower shin of the tibial section.

The foot structure comprises a gripping system suitable to enable at least the temporary, secure gripping of the foot structure onto the surface requiring maintenance, and an end effector mounted at the foot structure in a position suitable to allow the performance of a required task in relation to the surface or element associated with the surface in either of the extended and folded positions of the foot structure.

One or more of the aspects and variants mentioned in relation to the above defined walking robot system are also compatible and combinable with the walking robot system of this advantageous variant of the invention.

The invention also provides a reconfigurable leg and foot system mountable in a walking robot system, as set forth above, which has a robotic platform extending along longitudinal and transverse axes thereof, and with an integrated actuation and transmission system.

The reconfigurable leg and foot system comprises two or more walking legs articulatable to the robotic platform and configured to enable at least flexion and extension leg walking movements of the robot system on a surface.

Each leg comprises a femoral section articulatable to the platform at a hip articulation configured to allow the rotation of the femoral section with respect to the robotic platform, and a tibial section articulated to the femoral section by way of a knee section configured to allow the rotation of the tibial section with respect to the femoral section.

A foot structure is articulated at the free end of the tibial section, and the foot structure is actuatable to move between a folded position in which the foot structure is folded onto the leg and an extended, unfolded, surface-touching and gripping position.

The foot structure comprises a gripping system suitable to enable at least the temporary, secure gripping of the foot structure on a surface requiring maintenance, the gripping system comprising at least one, and preferably three, fingers, with each finger comprising a respective gripping element.

Actuation means are provided at the tibial structure which are operatively connected to the foot structure for the actuation thereof.

The actuation means are drivable by the actuation and transmission system integrated in the robot system for the reconfiguration of the leg and foot structure by way of hip joint rotation about a second axis of the hip joint from a first walking arrangement, with the foot structure folded onto the leg on which it is mounted and in which the legs are arrangeable opposite to each other at opposite sides of a robotic platform of a walking robot system in which the reconfigurable leg and foot system is to be mounted for erect walking movement in planes parallel to each other and to the longitudinal axis of the robotic platform, to a second walking arrangement, with the foot structure unfolded and in which the legs are arrangeable spread out in directions angled with respect to both the longitudinal and transverse axes of the robotic platform of the walking robot system for walking movement by way of hip joint rotation about the first and second axes of the hip joint, and, respectively, from the second walking arrangement back to the first walking arrangement.

The first and second axes can be arrangeable to lie respectively on a first and on a second plane, said first and second planes mutually intersecting.

In a variant, the first and second axes can be arranged perpendicular to each other.

The fingers are configured to allow walking motions of the leg for moving the robotic platform on a walking surface both in the first configuration with erect gait, with the foot structure folded, and in the second configuration with sprawling gait, with the foot structure unfolded to the extended, surface-touching and gripping position.

The reconfigurable leg and foot system can further comprise at least one end effector mounted at the tibial section of at least one of the two or more walking legs. The end effector is preferably mounted at a lower end of the tibial section.

The end effector is configured to support a tool, a sensor, or any other device devised for performing a required task in relation to the surface or element associated with the surface requiring maintenance.

The tibial section of each of the legs comprises an upper shin connected at an upper end thereof to the knee section, a lower end of the upper shin being connected to a lower shin.

The lower shin bears the foot structure at its lower, free end.

In an aspect, at least one end effector is mounted at the foot structure in a position suitable to allow the performance of a required task in relation to the surface or element associated with the surface in either of said extended position and said folded position of the foot structure.

The at least one end effector mounting position can be at any part of the lower end of the lower shin on a longitudinal axis thereof, and/or at a free end of the at least one finger, and/or between adjacent fingers, the mounting position being suitable to allow the performance of the task in either of the extended and folded positions of the foot structure.

In a further aspect, the gripping element comprises one or more from the group comprising a suction cup element, a permanent magnet, a solenoid, a clamp, a pincers, hooks, claws, and/or any other element adapted to provide, in said gripping position, at least temporary secure gripping of the foot structure on the surface requiring maintenance.

The invention further comprises an end effector mountable at a tibial section of at least one of the two or more walking legs of a walking robot or of a leg of a reconfigurable leg and foot system that have features as set forth above.

The end effector is preferably mountable at a lower end of the tibial section of a leg and is configured to support a tool, a sensor, or any other device devised for performing a required task in relation to a surface or element associated with the surface requiring maintenance on which the walking robot system moves.

### BRIEF DESCRIPTION OF THE DRAWINGS

The walking robot system, the reconfigurable foot and leg system mountable in a walking robot system, and the end effector therefor will now be described, by way of example only, in the accompanying drawings, in which:
Figs. 1a-1d are perspective views of walking robots that are known from the prior art;
Figs. 2a-2b are perspective views of a walking robot system according to the invention;
Fig. 3 is a perspective view of a reconfigurable leg and foot system, according to the invention, with the foot structure in the unfolded position;
Figs. 4a-4b are perspective views of the tibial section of a reconfigurable leg and foot system, according to the invention, with the foot structure respectively in the folded configuration and in the unfolded configuration;
Fig. 5 is a schematic cross-sectional view of the tibial section of a reconfigurable leg and foot system, according to the invention, with the foot structure in the unfolded configuration;
Figs. 6a-6f are perspective and partial cross-sectional views of the foot structure showing possible locations of end effectors, according to the invention;
Fig. 7 is a schematic cross-sectional view of a gripping element comprising a suction cup element according to the invention;
Fig. 8 is a schematic perspective view of an actuator of the hip articulation, according to the invention.

### DETAILED DESCRIPTION OF THE INVENTION

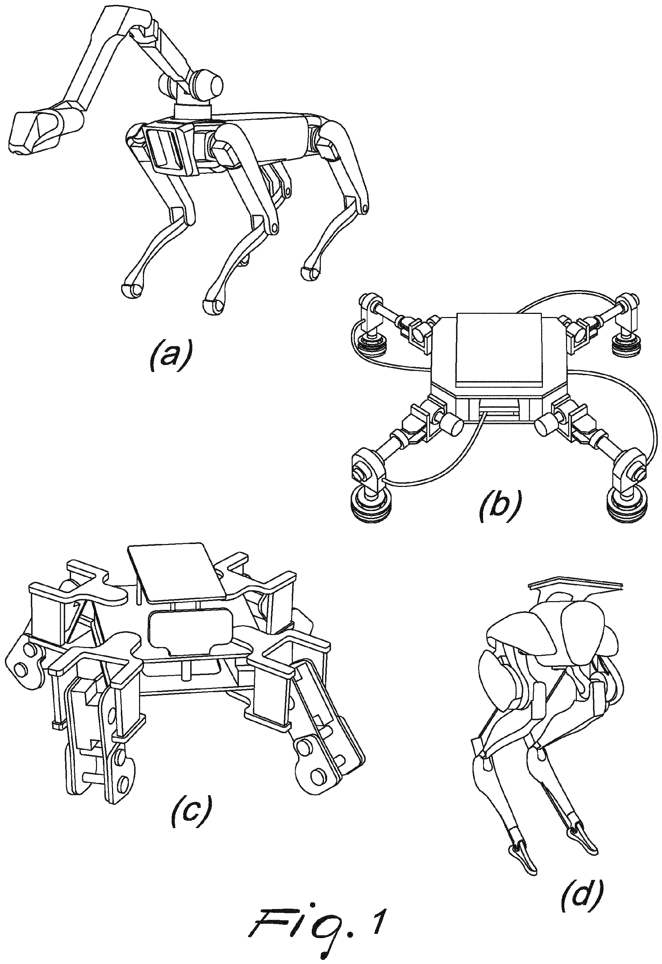

Known robot walking robot system configurations are shown in Figs. 1a-1d. The walking robot system of Figure 1a is provided with an arm having an end effector.

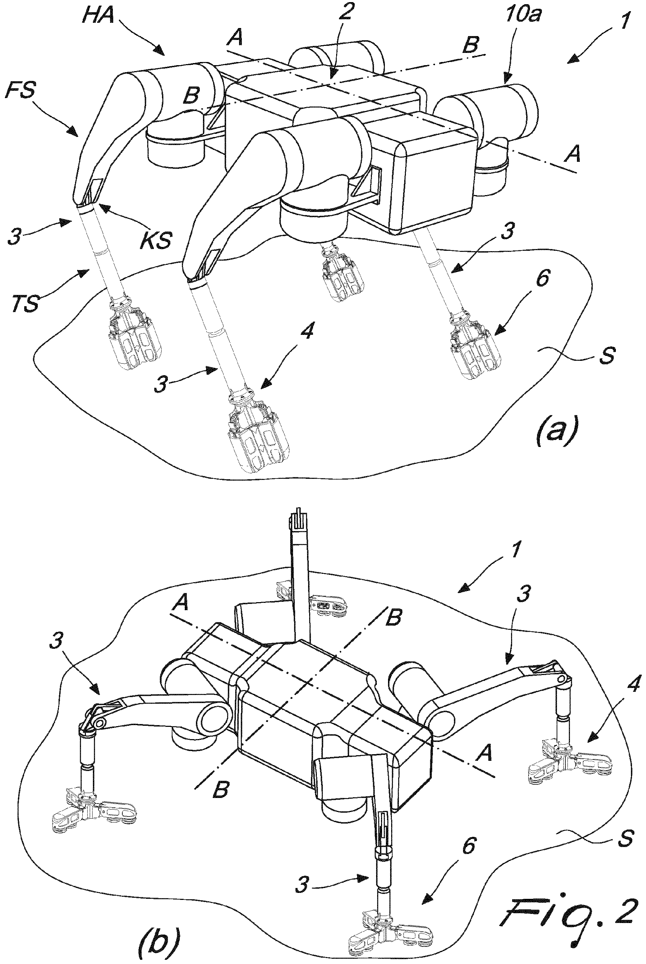

A preferred but not exclusive embodiment, according to the invention, of a walking robot system 1 for performing a task at a surface S requiring maintenance and of a reconfigurable leg and foot system 20 mountable on the walking robot system 1, is hereinafter disclosed with reference to Figures 2-8.

Figures 2a-2b show the walking robot system 1 in two different configurations.

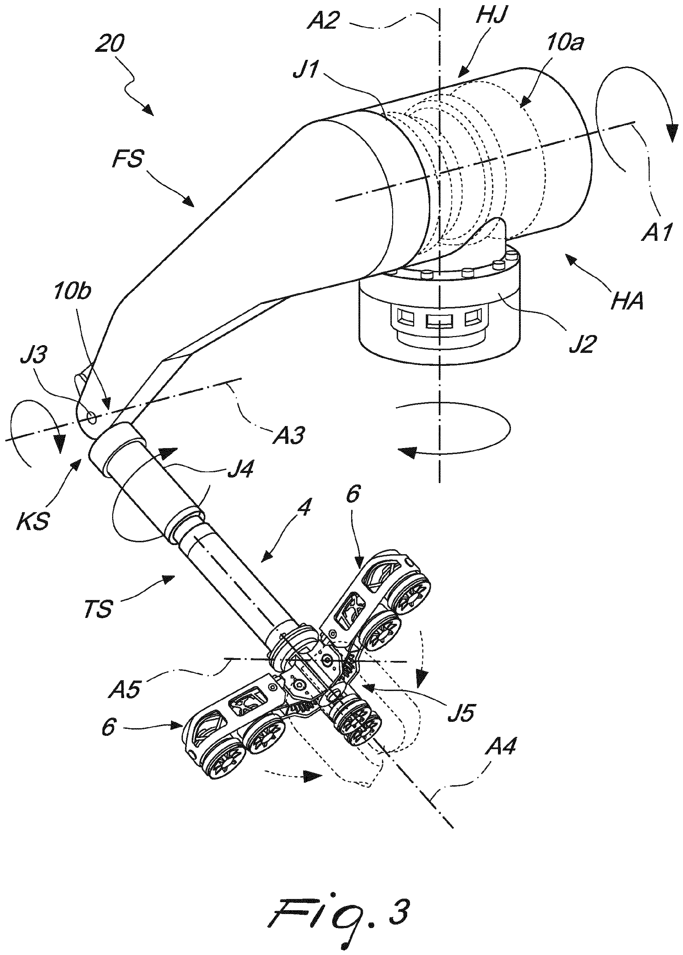

Figure 3 shows the reconfigurable leg and foot system 20 mountable on the walking robot system 1.

The walking robot system has a robotic platform 2 that extends along longitudinal A-A and transverse B-B axes thereof to which the legs 3 are articulated.

As shown in Figure 3, each one of the legs 3 that can be articulated to the robotic platform 2 all are configured to enable at least flexion and extension leg-walking movements on the surface S.

Each leg 3 comprises a femoral section FS which is/can be articulated to the platform 2 at a hip articulation HA configured to enable the rotation of the femoral section FS with respect to said robotic platform 2.

The leg 3 further comprises a tibial section TS which is articulated to the femoral section FS by way of a knee section KS configured to allow the rotation of the femoral section FS with respect to the tibial section TS and of the tibial section with respect to the femoral section FS.

A foot structure 4 is articulated to a free end of the tibial section TS. The foot structure 4 can be actuated to move between a folded position, in which the foot structure 4 is folded onto the leg 3, and an extended, unfolded position in which the foot structure 4 can touch and grip the surface S.

The foot structure 4 comprises a gripping system 5 adapted to enable at least the temporary, secure gripping of the foot structure 4 on the surface S requiring maintenance.

The gripping system 5 has at least one or two, and preferably three, fingers 6.

Each finger 6 can comprise at least one gripping element 7.

The first configuration of Figure 2a shows the legs 3 arranged opposite to each other at opposite sides of the robotic platform 2, in a first walking arrangement, for a walking movement in planes parallel to each other and to the longitudinal axis A-A of the robotic platform 2. The foot structure 4 is advantageously folded onto the leg 3.

The movement is enabled by a hip joint rotation about a first joint axis A1 (Figure 3) and is more suitable when the walking robot system 1 is intended to move on substantially horizontal surfaces, where fast walk with low energy consumption is possible and preferred.

Figure 2b shows a second configuration of a second walking arrangement, with the foot structure 4 advantageously unfolded, and in which the legs 3 are arranged along spread-out directions angled with respect to both the longitudinal A-A and transverse B-B axes of the robotic platform 2 of the walking robot system 1.

This arrangement allows a walking movement by way of hip joint rotation about both first and second axes A1, A2 of the hip joint HJ (Figure 3), and is more suitable when the robot system 1 is intended to move on inclined, vertical, or overhanging surfaces.

The walking robot system 1, according to the invention, is adapted not only for reconfiguration from the first configuration to the second configuration, but also for reconfiguration from the second configuration with the second walking arrangement back to the configuration with the first walking arrangement.

The reconfiguration of the walking arrangement, according to the type of surface S the robot system is intended to move on, is highly advantageous both for assuring safe and swift movement and to allow the lowest possible energy consumption.

The fingers 6 are configured to allow the walking motions of the leg 3 both in the first configuration with erect gait, with the foot structure 4 folded, and in the second configuration with sprawling gait, with the foot structure 4 unfolded to the extended, surface-touching and gripping position.

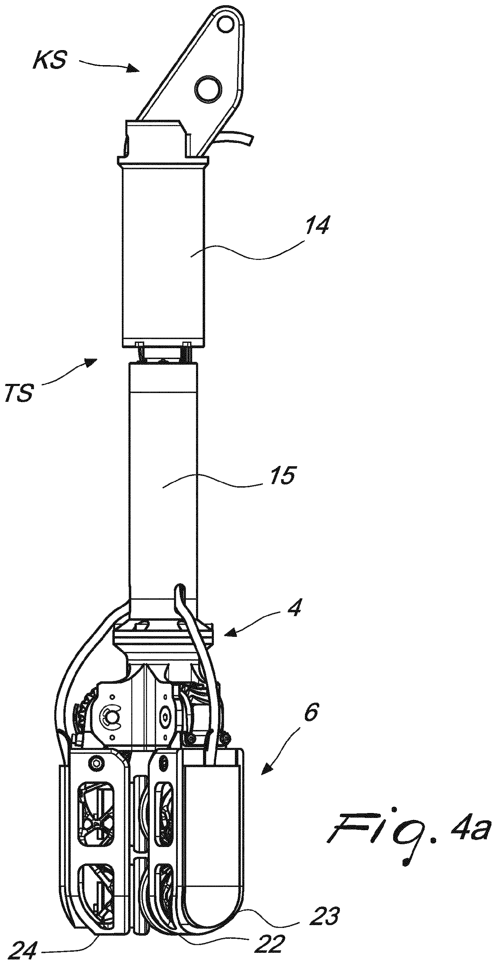

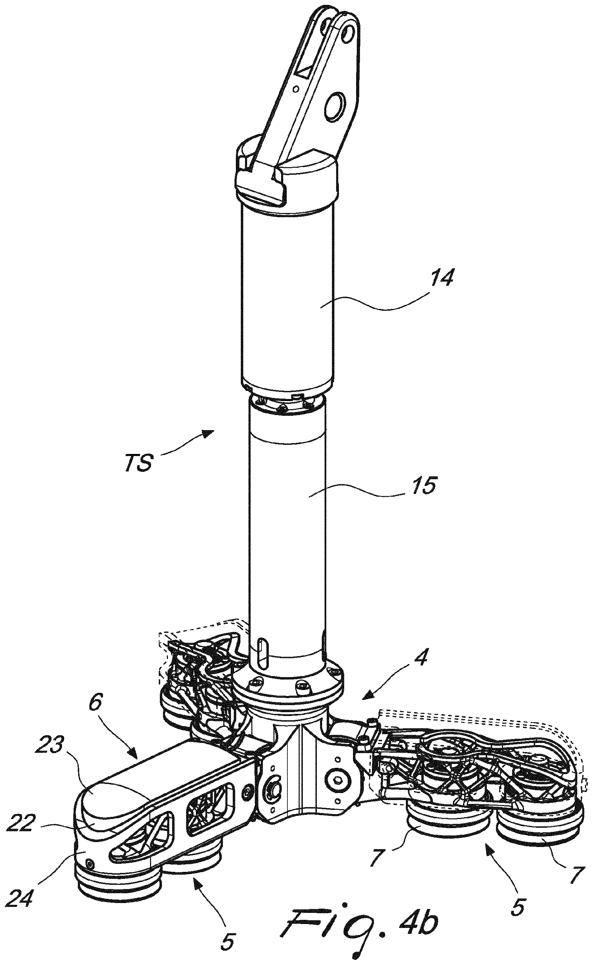

The foot structure 4 located at the free end of the tibial section TS and having the gripping system 5 with the fingers 6 provided with gripper elements 7 in the first, folded configuration is shown in Figure 4a. The second, unfolded configuration, extended in the surface-touching and gripping position, is shown in Figure 4b.

When the robot system is in the first configuration and first walking arrangement (Figures 2a and 4a), it was noted that a rigid foot walking end is useful to allow efficient and low energy-consumption horizontal movements. It was noted too, however, that it is also necessary to have a material that maintains a certain level of stiffness and which still offers a good grip on the walking surface.

According to a non-exclusive, exemplary embodiment, to achieve the required effects, it is advantageous that a 3D-printed ABS cover 22 is provided attached, using, for example, specific screws, over the folded fingers 6 forming so the walking foot end with the legs 3 oriented backward (Figures 2a and 4a).

Additionally, a polyurethane layer 23 can be glued on top of this cover 22, forming a sandwiched cover structure over the advantageously blunt, rounded shape of the outer finger cover 24 that is intended to come into contact with the walking surface as shown, for example, in Figures 4a-4b, 5 and 6c.

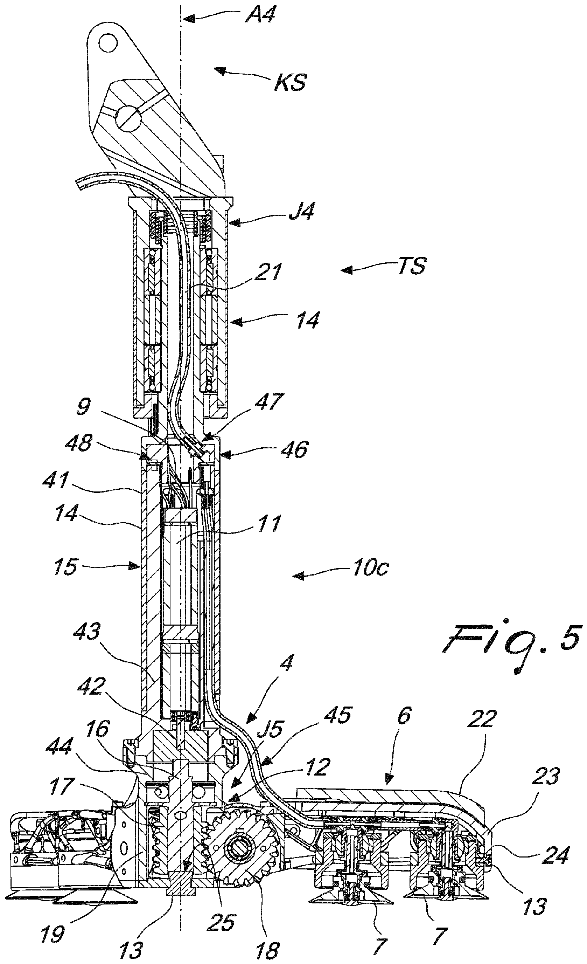

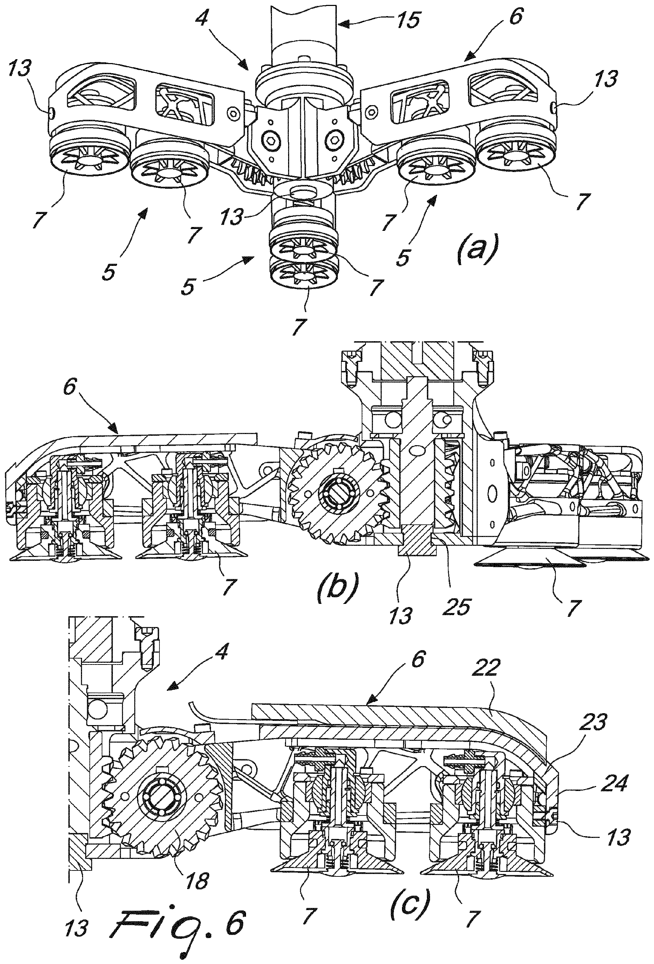

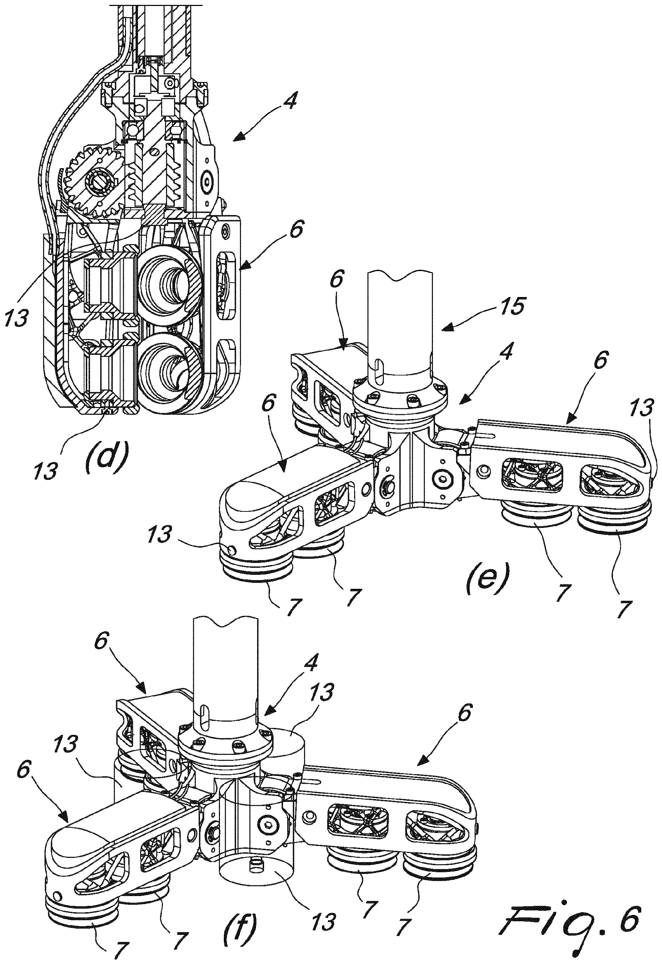

Other known, suitable materials and fixing means can be alternatively used. According to a most advantageous embodiment, at least one end effector 13 can be further mounted at said tibial section TS of at least one of the two or more walking legs 3, preferably at a lower end thereof, as shown for example in Figures 5 and 6a-6f.

The end effector 13 can be configured to support a tool, a sensor, or any other device devised for performing a required task in relation to said surface 2 or element associated with the surface 2 requiring maintenance.

As shown in Figure 5, the tibial section TS of each of said legs 3 can be configured to comprise an upper shin 14 and a lower shin 15. The upper shin 14 is connected at an upper end thereof to the knee section KS and its lower end is connected to the lower shin 15. The lower shin 15 bears, at its lower, free end, the foot structure 4.

According to advantageous, non-exclusive embodiments illustrated in Figures 5 and 6a-6f, the one or more end effectors 13 is/are preferably provided mounted at the lower end of said lower shin 15 on a longitudinal axis thereof and/or at a free end of said at least one finger 6 and/or between adjacent fingers 6, all in a position suitable to allow the performance of the required task in either of the extended and folded positions of the foot structure 4.

The end effector 13, as illustrated in Figures 5 and 6a-6c, can advantageously be mounted on the longitudinal axis A4 of the lower shin 15 in an adapted seat 25 arranged to face the walking surface requiring maintenance S.

The end effector 13 is conceived to be an element of the robot leg 3.

In one embodiment, for example, it is embedded in the gripping system 5 responsible for ensuring climbing forces and it contains the sensors/tools necessary for performing specific industrial task.

Figure 5 shows an example of an end effector, according to the invention, which includes, for example, ultrasound probes (UT) for measurements of the integrity of metal plates such as thickness measurements, detection of cracks and corrosions, and holes. As an alternative, the UT probe can be easily exchanged for eddy current probes (ET) or other compact sensors, thus increasing the number of operations and measurements that the robot system can carry out.

In another, non-limiting example, the end effector 13 is provided, by means of integration, with a compact laser head, for example in the seat at the base of the shaft 16. The laser source can be hosted on the robotic platform 2, thus allowing the robot system to perform manufacturing tasks such as cutting, perforation, corrosion removal, surface treatments, painting removal, surface cleaning, etc.

Such described end effectors 13 can also be integrated in the lower leg of robots already existing on the market.

As shown in Figures 5, 6a-6f and 7, the at least one gripping element 7 comprises at least one suction cup element 40.

The suction cup element 40 can be composed of multiple components and features four degrees of freedom DoF: three rotational and one translational. These are features that advantageously confer adaptability of the leg 3 to every type of surface condition.

The rotational movements are enabled by a spherical joint 26, while the translational movement is facilitated by a cylinder 27/piston 28 system assisted by a compression spring 29.

Guidance for the piston 28 is provided by a surrounding bushing 30, and its sealing is ensured by an O-ring 31. A circlip 32 is provided and mounted as a mechanical stop, and is effective by virtue of its interference fit with the guiding bushing 30.

To prevent pressure losses in the pneumatic system of the suction cup element 40 when its suction cup 33 is not engaged, the piston is divided into two parts 28 and 34, to accommodate a spring-loaded feeler 35. When in contact with a surface, the feeler 35 retracts, allowing the passage of air; otherwise, it remains in position, sealing the conduit 36 with the help of a compression spring 37 which exerts pressure on a sealing O-ring 38.

At the upper part of the suction cup element 40, pneumatic connections 39 are provided that enable the interconnection of the suction cup element 40 with a conveyance system 21 reaching the lower shin 15 of the tibial section TS.

As an alternative to the suction cup element 40, other suction elements can be used, such as the vacuum cup disclosed in document EP4091778 by the same inventors.

The one or more gripping elements 7 can comprise, as an alternative to or in combination with the suction cup element 40, at least one from the group comprising a permanent magnet, a solenoid, a clamp, a pincers, hooks, claws, and/or any other element adapted to provide, in the gripping position, at least temporary secure gripping of the foot structure 4 on the surface requiring maintenance S.

With reference to Figures 2 and 3, the hip articulation HA, which enables movement of the femoral FS and tibial TS sections with respect to each other in a same plane, comprises first J1 and second J2 rotary joints.

These rotary joints comprise an actuator 10a and are configured to enable the rotation of said femoral section TS about first A1 and second A2 hip joint axes that lie respectively on a first and on a second plane, said first and second planes mutually intersecting.

In a variant, the first A1 and second A2 hip joint axes can be perpendicular to each other.

Advantageously, the knee section KS comprises a third rotary joint J3 configured to enable the rotation of the tibial section TS with respect to the femoral section FS, about a knee axis A3 which is substantially perpendicular to the plane of movement of the femoral FS and tibial TS sections.

The third rotary joint J3 comprises a knee actuation 10b, of a known type, and can be connected to, and actuated by, the actuation 10a and driven by the transmission system ATS integrated in the robot system.

As also shown in Figures 3 and 5, the tibial section TS comprises a fourth rotary joint J4 configured to enable the axial rotation of a shaft 16 by way of the actuation means 10c about an axial axis A4 of the tibial section TS.

The foot structure 4 comprises a fifth rotary joint J5 configured to enable, upon actuation by way of the actuation means 10c, the movement of the foot structure 4 between the folded position and the extended, unfolded position.

The first to fifth joints J1-J5 are all actuatable by way of the actuation means 10a-10c which are driven by the actuation and transmission system ATS.

The above-mentioned actuations and movements of the leg and foot system having 5 degrees of freedom, DoFs, organized in 4 active rotary joints 11-13, J5 and one passive rotational joint J4 axially located in the shinbone of the leg (Figure 3), can be carried out, according to an exemplary, non-exclusive example, as follows.

The position and orientation of the joints are distributed along the kinematic chain in such a way that the inertial and mass are minimized and placed as close as possible to the robot body.

Moreover, the first two serially-connected joints J1 and J2 are oriented in such a way that the two robot configurations achievable, i.e. the "dog" and the "spider" configurations, allow the robot to efficiently perform fast walking gaits over obstacles with different postures as well as to crawl in narrow spaces by assuming crouched postures. The "spider" configuration also ensures variable distance of the center of mass of the robot system from vertical walls, and variable foot position can also be achieved.

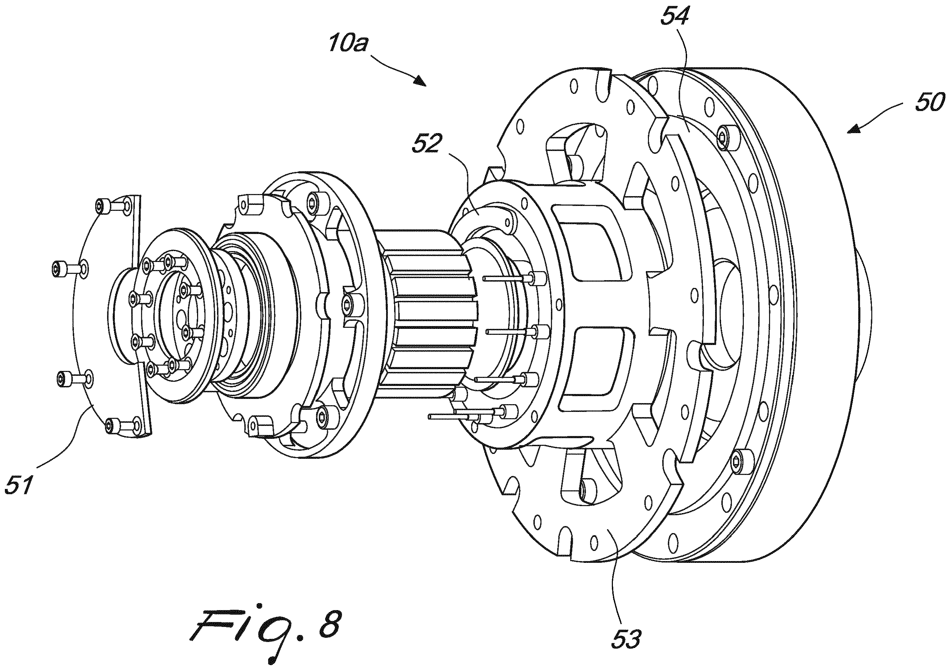

With reference to Figures 3 and 8, the actuator 10a of the leg joints J1 and J2 can be provided, according to an exemplary embodiment, by way of a torque DC brushless motor 50, with an absolute magnetic encoder 51 and Hall effect sensor 52, integrated into a custom aluminum frame 53 and connected to a harmonic reducer 54 to provide torque up to 50 Nm for J2, and 90 Nm for J1 (Figure 3). The ultra-light mechanical structure of the leg (less than 1 kg) can be made of Ti64A14V, aluminum alloys, and carbon fiber composite in order to achieve high mechanical performance with light design as well as ensure high resistance to harsh conditions and corrosion.

Advantageosuly, outer surfaces, in particular an outer layer in the form of a sleeve 41 (Figure 5) of the robotic leg 3, are made from a flexible-form material, for example carbon fiber or Kevlar (aramid fiber). The sleeve layer 41 houses at least one seat that can integrate flexible resistive force sensors adapted to provide contact force feedback (for example up to 290 N).

All the resistive force sensors are connected to the actuation and transmission system ATS for controlling and correcting the robot system configuration. Thus, the resistive force sensors will provide a controller of known type of the robot system with information regarding the efficiency of the contact with the surface.

Other known devices can also be used, provided that they can ensure the actuation forces and torques suitable for the operations of the robot system 1 as claimed.

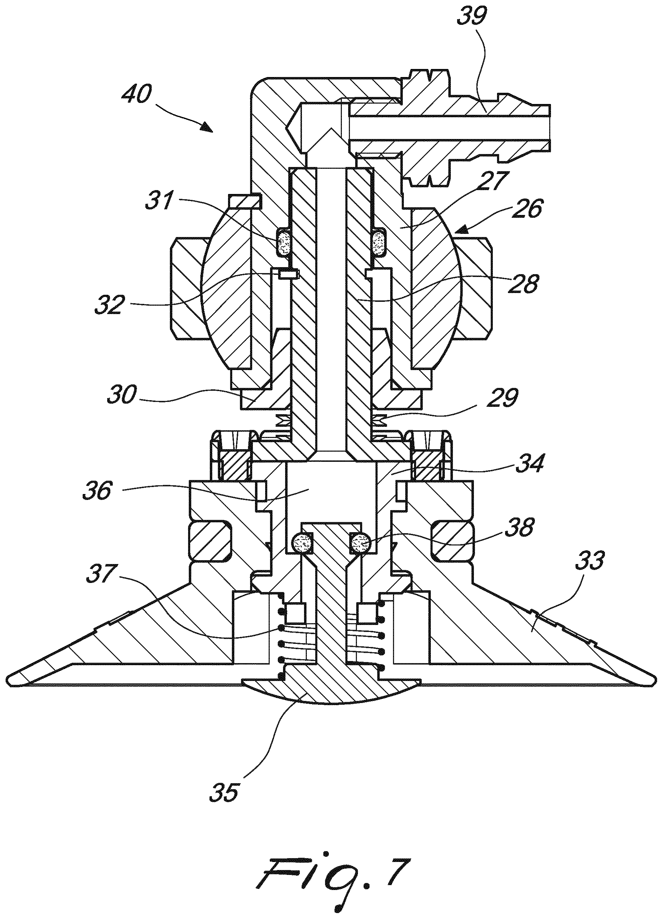

When approaching steep surfaces to be climbed, the actuated joint J4 within the shin 14, 15 of the leg actuates the opening of the foot structure 4 to the unfolded configuration. A tripod foot configuration can thus be achieved with multiple adhesion/gripping systems 5, thus providing adhesion/gripping capabilities over ferrous and non-ferrous surfaces. The flexible material of the suction cup 33 (Figure 7) ensures high grasping forces, for example up to 400 N, on steel surfaces, and its topological adaptation to even irregular surfaces (for example concrete).

With reference to Figure 5, according to a non-exclusive embodiment, the actuation means for the actuation of the foot structure 4 can comprise a motor drive constituted by a micromotor 10c.

In other embodiments the motor drive can be substituted by other motion systems, for instance based on vacuum, hydraulic pistons or solenoids, or lever mechanisms.

The micromotor 10c comprises an actuation motor 11, a planetary gearbox 12, and a feedback system 9 connected to said actuation and transmission system ATS.

The actuation motor 11 actuates the rotation of a shaft 16, located centrally with respect to the foot structure 4, on which a worm screw 17 is mounted.

The worm screw 17 transmits motion to a worm gearwheel 18 positioned radially with respect to the worm screw 17. The worm wheel 18 is mounted along with the at least one finger 6 on a fork element 19 mounted at the free end of the lower shin 15 of the tibial section TS.

The lower shin 15, and also the upper shin 14, houses a conveyance system 21 for conveying air and/or liquid and/or electric current for the actuation of the gripping elements 7.

In more detail, the worm screw 17 transmits motion to three gearwheels 18 positioned radially, preferably at 120° from each other, and fixed along with the fingers 6 on the fork 19 placed on the lower shin 15. To compensate for vibrations and potential misalignments, the connection between the motor 11 and the shaft 16 is achieved through a flexible coupling 42. To facilitate assembly, the lower shin 15 is divided into two parts 43, 44, and a hole in the upper part 43 provides access to a fastening screw for the motor shaft 16.

The lower shin 15 also houses a conveyance system, for example for air, comprising tubes 45 coming from the fingers 6, unifying, in this exemplary embodiment, three pipes into a single pipe. This is accomplished through a cap-like component 46 screwed onto the upper part of the lower shin 15. The cap component 46 features a circular axial cavity on the lower side, connected via a hole to a pneumatic fitting 47. The same cavity is replicated on the upper shin 14 and communicates through three holes with the pneumatic fitting 47 of the tubes 45 of the finger. A perforated ring gasket 48 is placed between the two elements, the tubes 45 and the fitting 47, to allow the radial sealing and axial passage of air toward the suction cup element 40.

A carbon or aramid fiber sleeve 41 is fitted onto the shin. In this case, it also serves the purpose of maintaining the tubes in position and protecting them from potential damage caused by external factors, thus diminishing the necessity for extraordinary maintenance.

The above-described technical solutions were developed and adapted to overcome the current limits of the known solutions, so as to arrive at a walking robot system.

## Claims

1. A walking robot system for performing a task at a surface requiring maintenance, the robot system (1) comprising:
- a robotic platform (2) extending along longitudinal (A-A) and transverse (B-B) axes thereof;
- two or more walking legs (3) articulated to the robotic platform (2) and configured to enable at least flexion and extension leg-walking movements of the robot system (1) on a surface (S);
wherein each leg (3) comprises:
- a femoral section (FS) articulated to said platform (2) at a hip articulation (HA) configured to allow rotation of said femoral section (FS) with respect to said robotic platform (2);
- a tibial section (TS) articulated to said femoral section (FS) by way of a knee section (KS) which is configured to allow rotation of the femoral section (FS) and of the tibial section (TS) with respect to each other; and
- a foot structure (4) articulated at a free end of the tibial section (TS), said foot structure being movable between a folded position, in which the foot structure (4) is folded onto the leg (3), and an extended, unfolded, surface-touching and gripping position,
wherein the foot structure (4) comprises a gripping system (5) suitable to enable at least temporary, secure gripping of the foot structure (4) on the surface requiring maintenance (S), the gripping system (5) comprising at least one, and preferably three, fingers (6), with each finger (6) comprising at least one gripping element (7); and
- an actuation and transmission system (ATS) integrated in the robot system (1) and driving actuation means (10a-10c) provided at, and operatively connected to, said foot structure (4) for actuation thereof, said actuation means (10a-c) being adapted
- to fold to a first configuration and, respectively, unfold to a second configuration, the foot structure (4) onto the leg (3), andwith respect to the leg (3),
- to move the legs (3) in order to perform walking motions with the foot structure (4) both in the first, folded and in the second, unfolded configurations, and
wherein said fingers (6) are configured to allow walking motions of the leg (3) for movement of the robotic platform (2) on said surface (S), both in the first configuration with erect gait, with the foot structure (4) folded, and in the second configuration with sprawling gait, with the foot structure (4) unfolded to the extended, surface-touching and gripping position.

2. The walking robot system according to claim 1, further comprising at least one end effector (13) mounted at said tibial section (TS) of at least one of the two or more walking legs (3), preferably at a lower end thereof, the end effector (13) being configured to support a tool, a sensor, or any other device devised for performing a required task in relation to said surface (S) or element associated with the surface (S) requiring maintenance.

3. The walking robot system according to claim 1 or 2,
wherein the tibial section (TS) of each of said legs (3) comprises an upper shin (14) connected at an upper end thereof to the knee section (KS), a lower end of the upper shin (14) being connected to a lower shin (15), the lower shin (15) bearing at its lower, free end said foot structure (4), and
wherein at least one end effector (13) is provided mounted at said foot structure (4) in a position suitable to allow performance of a required task in relation to said surface (S) or element associated with the surface (S) in either of said extended position and said folded position of said foot structure (4).

4. The walking robot system according to any of the preceding claims, wherein one or more end effectors (13) is/are provided mounted at the lower end of said lower shin (15) on a longitudinal axis thereof and/or at a free end of said at least one finger (6) and/or between adjacent said fingers (6), all in a position suitable to allow performance of said task in either of said extended position and said folded position of said foot structure (4).

5. The walking robot system according to any of the preceding claims, wherein said at least one gripping element (7) comprises at least one from the group comprising a suction cup element (40), a permanent magnet, a solenoid, a clamp, a pincers, hooks, claws, and/or any other element adapted to provide, in said gripping position, at least temporary, secure gripping of the foot structure (4) on the surface requiring maintenance (S).

6. The walking robot system according to any of the preceding claims, wherein
said femoral (FS) and tibial (TS) sections are movable with respect to each other on a same plane;
said hip articulation (HA) comprises first and second rotary joints (J1, J2) configured to enable rotation of said femoral section (TS) about first (A1) and second (A2) hip joint axes which lie respectively on a first and on a second plane, said first and second planes mutually intersecting;
said knee section (KS) comprises a third rotary joint (J3) configured to enable rotation of the tibial section (TS) and of the femoral section (FS), with respect to each other, about a knee axis (A3) which is substantially perpendicular to the plane of movement of the femoral (FS) and tibial (TS) sections;
said tibial section (TS) comprises a fourth rotary joint (J4) configured to enable axial rotation of a shaft (16) about an axial axis (A4) of the tibial section (TS); and
said foot structure (4) comprises a fifth rotary joint (15) configured to enable actuation, upon said axial rotation actuated by said fourth rotary joint (J4), for movement of said foot structure between the folded position and the extended, unfolded position;
all said first to fifth joints (J1-J5) being actuatable by way of said actuation means (10a-10c) driven by said actuation and transmission system (ATS).

7. The walking robot system (1) according to claim 1 or 6, wherein said actuation means (10a-c) are further adapted:
to move the legs (3), by way of hip joint rotation about the second joint axis (A2), from a first walking arrangement in which the legs (3) are arranged opposite to each other at opposite sides of the robotic platform (2) for walking movement in planes parallel to each other and to the longitudinal axis (A-A) of said robotic platform (2), to a second walking arrangement in which the legs (3) are arranged spread out in directions angled with respect to both the longitudinal (A-A) and the transverse (B-B) axes of the robotic platform (2) for walking movement by way of hip joint rotation about said first and second axes (A1, A2) of the hip joint (HJ),
and, respectively, from the second walking arrangement back to the first walking arrangement.

8. The walking robot system according to claim 1, 2 or 6, wherein said actuation means (10a-10c) for the actuation of said foot structure (4) comprises a micromotor (10c).

9. The walking robot system according to claim 8, wherein said micromotor (10c) comprises an actuation motor (11), a planetary gearbox (12), and a feedback system (9) connected to said actuation and transmission system (ATS), said actuation motor (11) actuating rotation of the shaft (16) on which a worm screw (17) is mounted, said worm screw (17) transmitting motion to a worm wheel (18) positioned radially with respect to said worm screw (17) and mounted along with the at least one finger (6) on a fork element (19) mounted at the free end of said tibial section (TS).

10. The walking robot system according to any of claims 3-9, wherein the lower shin (15) houses a conveyance system (21) for conveying air and/or liquid and/or electric current for the actuation of the gripping elements (7).

11. A reconfigurable leg and foot system (20) mountable on a walking robot system (1) having a robotic platform (2) extending along longitudinal (A-A) and transverse (B-B) axes thereof, and with an integrated actuation and transmission system (ATS), according to any of claims 1-10, the reconfigurable leg and foot system comprising two or more walking legs (3) articulatable to the robotic platform (2) by way of a hip joint (HJ) enabled for rotation about first and second axes (A1, A2) which are arranged to lie respectively on a first and on a second plane, said first and second planes mutually intersecting, the legs (3) configured to enable at least flexion and extension leg walking movements of the robot system (1) on a surface (S),
wherein each leg (3) comprises:
- a femoral section (FS) articulatable to said platform (2) at a hip articulation (HA) configured to allow rotation of said femoral section (FS) with respect to said robotic platform (2);
- a tibial section (TS) articulated to said femoral section (FS) by way of a knee section (KS) configured to allow rotation of the femoral section (FS) and of the tibial section (TS) with respect to each other;
- a foot structure (4) articulated at a free end of said tibial section (TS), said foot structure (4) being actuatable to move between a folded position in which the foot structure (4) is folded onto the leg (3) and an extended, unfolded, surface-touching and gripping position, the foot structure (4) comprising a gripping system (5) suitable to enable at least temporary, secure gripping of the foot structure (4) on a surface requiring maintenance (S), the gripping system (5) comprising at least one, and preferably three, fingers (6), with each said finger (6) comprising a respective gripping element (7); and
- actuation means (10c) provided at said tibial structure (TS) which are operatively connected to said foot structure (4) for actuation thereof,
wherein said actuation means (10c) are drivable by the actuation and transmission system (ATS) integrated in the robot system (1) for the reconfiguration of the leg (3) and foot structure (4) by way of hip joint rotation about the second axis (A2) of the hip joint (HJ):
- from a first walking arrangement, with the foot structure (4) folded onto the leg (3) on which it is mounted, and in which the legs (3) are arrangeable opposite to each other at opposite sides of a robotic platform (2) of the walking robot system (1) in which the reconfigurable leg and foot system is to be mounted for erect walking movement in planes parallel to each other and to the longitudinal axis (A-A) of the robotic platform (2),
- to a second walking arrangement with the foot structure (4) unfolded and in which the legs (3) are arrangeable along spread-out directions angled with respect to both the longitudinal (A-A) and transverse (B-B) axes of the robotic platform (2) of the walking robot system (1) for a walking movement by way of hip joint rotation about the first and second axes (A1, A2) of the hip joint (HJ), and, respectively,
- from the second walking arrangement back to the first walking arrangement;
and
wherein said fingers (6) are configured to allow walking motions of the leg (3) for movement of the robotic platform (2) on a walking surface (S) both in the first configuration with erect gait, with the foot structure (4) folded, and in the second configuration with sprawling gait, with the foot structure (4) unfolded to the extended, surface-touching and gripping position.

12. The reconfigurable leg and foot system of claim 11, further comprising at least one end effector (13) mounted at said tibial section (TS) of at least one of the two or more walking legs (3), the end effector (13) being configured to support a tool, a sensor, or any other device devised for performing a required task in relation to said surface (S) or element associated with the surface requiring maintenance (S).

13. The reconfigurable leg and foot system of claim 11 or 12,
wherein the tibial section (TS) of each of said legs (3) comprises an upper shin (14) connected at an upper end thereof to the knee section (KS), a lower end of the upper shin (14) being connected to a lower shin (15), the lower shin (15) bearing at its lower, free end said foot structure (4), and
wherein at least one end effector (13) is provided mounted at said foot structure (4) in a position suitable to allow performance of a required task in relation to said surface (S) or element associated with the surface (S) in either of said extended position and said folded position of said foot structure (4), the at least one end effector mounting position being at any one of the lower end of said lower shin (15) on a longitudinal axis thereof, at a free end of said at least one finger (6), and between adjacent said fingers (6), the mounting position being suitable to allow the performance of said task in either of said extended position and said folded position of said foot structure (4).

14. The reconfigurable leg and foot system of any of claims 11-13, wherein said gripping element (7) comprises at least one from the group comprising a suction cup element (40), a permanent magnet, a solenoid, a clamp, a pincers, hooks, claws, and/or any other element adapted to provide, in said gripping position, at least temporary secure gripping of the foot structure (4) on the surface requiring maintenance (S).

15. An end effector (13) mountable at a tibial section (TS)
of at least one of the two or more walking legs (3) of a walking robot system (1) according to any of claims 1-10, or
of a leg (3) of a reconfigurable leg and foot system (20) according to any of the claims 11-14,
wherein the end effector (13) is preferably mountable at a lower end of the tibial section (TS), and is configured to support a tool, a sensor or any other device devised for performing a required task in relation to a surface (S) or element associated with the surface (S) requiring maintenance on which the walking robot system moves.
